(19)

**Europäisches Patentamt**

**European Patent Office**

**Office européen des brevets**

(11) **EP 2 143 891 B1**

(12) **EUROPEAN PATENT SPECIFICATION**

| | |
|---|---|
| (45) Date of publication and mention of the grant of the patent: **28.03.2012 Bulletin 2012/13** | (51) Int Cl.: *F01K 7/20* (2006.01) *F01K 17/02* (2006.01) *F22B 1/18* (2006.01) *F01K 13/02* (2006.01) |

(21) Application number: **08425474.7**

(22) Date of filing: **10.07.2008**

(54) **A device for controlling the pressure of a steam turbine of a combined cycle plant and a bypass system thereof**

Vorrichtung zur Drucksteuerung einer Dampfturbine eines Kombikraftwerks und Umleitungssystem dafür

Dispositif pour le contrôle de la pression d'une turbine à vapeur d'une installation à cycle combiné et système de dérivation correspondant

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**13.01.2010 Bulletin 2010/02**

(73) Proprietor: **ANSALDO ENERGIA S.P.A.**
**16152 Genova (IT)**

(72) Inventors:
• **Repetto, Enrico**
**16149 Genova (IT)**

• **Gruppi, Pietro**
**16146 Genova (IT)**
• **Massocco, Alberto**
**16139 Genova (IT)**
• **Nahum, Corrado**
**16145 Genova (IT)**

(74) Representative: **Bergadano, Mirko et al**
**Studio Torta S.p.A.**
**Via Viotti, 9**
**10121 Torino (IT)**

(56) References cited:
**US-A- 4 226 086     US-A- 4 793 132**
**US-A1- 2003 024 248     US-B1- 6 220 014**

## Description

The present invention relates to a device for controlling the pressure of a steam turbine of a combined cycle plant and a bypass system thereof.

It is known that steam turbine control in combined cycle plants is complex and fairy problematic, because it has to cope with several events in both normal operating conditions and in transient conditions.

Firstly, it should be considered that, in combined cycle plants, steam turbine operation closely depends on the operating conditions of the gas turbine, because the exhaust gases of the latter provide the thermal energy required for the production of steam. The flow of exhaust gas of the gas turbine, which is directly related to load, thus determines the operating limits of the steam turbine.

Furthermore, it should be considered that several independent suppliers are present in modern electric energy distribution networks. Network condition control, previously entrusted to a single entity, is now the responsibility of all suppliers and the plants must comply with often very strict standards. Broad flexibility is required in all cases with regard to intervention capacities for both network adjustment and to respond to extremely varying load requests.

For example, plant shutdown and consequent restarting have become relatively frequent events. Similarly, load rejection conditions of the gas turbine, in which the generator coupled to the gas turbine itself remains isolated from the network, are not rare. In this case, the gas turbine runs at minimum load and the steam turbine must be taken to a compatible operating condition.

The currently available pressure control apparatuses of steam turbines are not satisfactory because they are still quite complex and require a considerable effort and preparation by the powerplant operators.

Precisely for the relevance of the human factor, this firstly implies higher error risks. Furthermore, the installation, testing and maintenance costs and times are also very high and require complex, difficult procedures.

US 4 226 086 discloses an automatic control for fast restart of a hot steam turbine plant. After a plant trip, the control determines a boiler load and setpoints for bypass valves based on operating condition, in order to match the turbine and steam temperatures.

It is thus an object of the present invention to provide a device and method for controlling the pressure of a steam turbine and the bypass system thereof in a combined cycle plant, which allows to overcome the described limitations.

According to the present invention, a device for controlling the pressure of a steam turbine of a combined cycle plant and a bypass system thereof is provided, as claimed in claim 1.

The present invention will now be described with reference to the accompanying drawings, which illustrate a non-limitative embodiment thereof, in which:

- figure 1 is a simplified block diagram of a combined cycle plant;
- figure 2 is a simplified block diagram of the control device in accordance with an embodiment of the present invention, incorporated in the combined cycle plant in figure 1;
- figure 3 is a detailed block diagram of a first element of the device in figure 2;
- figures 4-10 are charts showing quantities related to the device in figure 1; and
- figure 11 is a detailed block diagram of a second element of the device in figure 2.

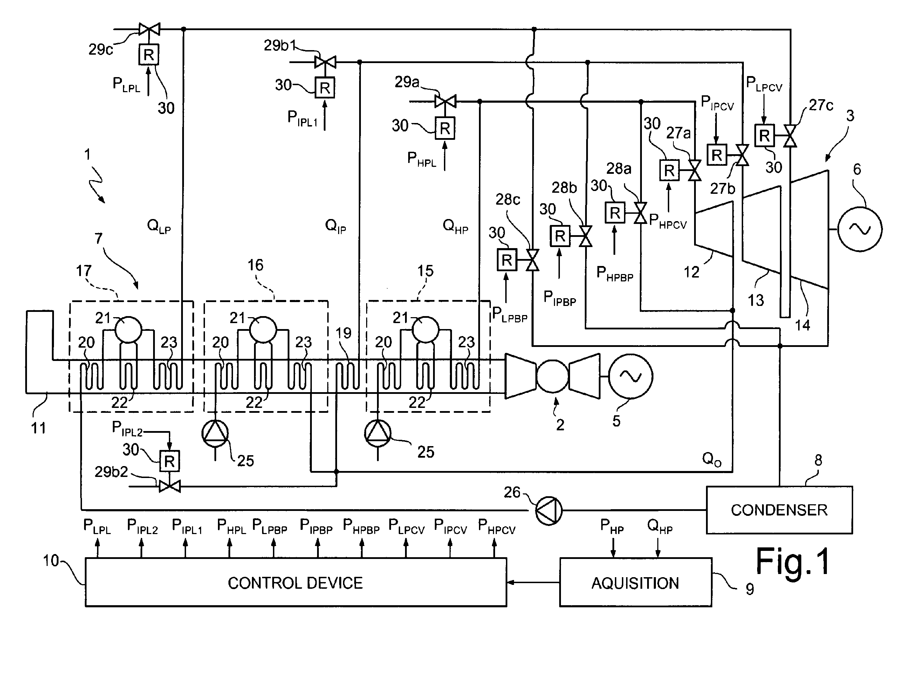

As shown in figure 1, a combined cycle plant for the production of electric energy comprises a gas turbine 2, a steam turbine 3, two alternators 5, 6, coupled to the gas turbine 2 and to the steam turbine 3 respectively, a steam generator 7, a condenser 8, an acquisition module 9 and a control device 10 associated to the steam turbine 3 and to the bypass system thereof. Alternatively, the plant may comprise a gas turbine, a steam turbine and an alternator on a same axis.

The gas turbine 2 operates under the control of a corresponding regulator device, of known type and not shown herein. The exhaust fumes of the gas turbine 2 are channeled along a pipe 11 and provide a heat source for the steam generator 7.

The steam turbine 3 comprises a high-pressure section 12, an intermediate-pressure section 13 and a low-pressure section 14. In a different embodiment (not shown), the steam turbine comprises the high-pressure section and an intermediate-low-pressure section.

The steam generator 7 comprises a high-pressure element 15, an intermediate-pressure element 16 and a low-pressure element 17, each of which comprises an economizer 20, a drum 21, an evaporator 22 and a superheater 23, the operation of which is known and will not be discussed in detail.

The economizers 20 of the high-pressure element 15 and of the intermediate-pressure element 16 receive water from corresponding feeding pumps 25, while the economizer 20 of the low-pressure element 17 receives water from a collecting tank of the condenser 8, through an extraction pump 26.

The high-pressure element 15 feeds a high-pressure steam flow rate $Q_{HP}$ to the high-pressure section 12 of the steam turbine 3.

The intermediate-pressure element 23 supplies a superheated steam flow rate $U_S$, which is added to the outlet flow rate $Q_O$ from the high-pressure section 12 of the steam turbine 3 to form an intermediate-pressure steam flow rate $Q_{IP}$ to be fed the intermediate-pressure section 13 of the steam turbine 3 through a further superheater 19.

The low-pressure element 17 supplies the low-pressure steam flow rate $Q_{HP}$ to be fed to the low-pressure section 14 of the steam turbine 3.

The discharge of the low-pressure section 14 of the steam turbine 3 is connected to the condenser 8, while the discharge of the intermediate-pressure section 13 is connected to the inlet of the low-pressure section 14.

The steam turbine 3 is provided with a plurality of regulation valves, controlled by the control device 10, as explained in detail below, in order to regulate the pressure conditions within the cylindrical bodies 21 of the high-pressure element 15, of the intermediate-pressure element 16 and of the low-pressure element 17, as well as the flow of steam to the high-pressure section 12, to the intermediate-pressure section 13 and to the low-pressure section 14. The regulation valves include:

a high-pressure inlet valve 27a, an intermediate-pressure inlet valve 27b and a low-pressure inlet valve 27c, for regulating the steam flow entering the high-pressure section 12, the intermediate-pressure section 13 and the low-pressure section 14 of the steam turbine 3, respectively;

a high-pressure bypass valve 28a, an intermediate-pressure bypass valve 28b and a low-pressure bypass valve 28c, parallelly connected to the high-pressure section 12, to the intermediate-pressure section 13 and to the low-pressure section 14 of the steam turbine 3, respectively (the bypass valves 28a-28c form the steam turbine bypass system 3); and

a high-pressure induction valve 29a, arranged downstream of the superheater 23 of the high-pressure element 15 of the steam generator 7, two intermediate-pressure induction valves 29b1, 29b2, arranged downstream of the superheater 23 of the intermediate-pressure element 16 and downstream of the re-superheater 19 respectively, and a low-pressure induction valve 29c, arranged downstream of the superheater 23 of the low-pressure element 17.

All inlet valves 27a-27c, bypass valves 28a-28c and induction valves 29a-29d are provided with corresponding regulators 30, (known per se), mutually independent and operating on valve actuating members so that the pressure upstream of each valve tends to go to a corresponding pressure set point.

The control device 10, which will be described in detail below, generates appropriate pressure set points for the regulators 30 of each of the inlet valves 27a-27c, the bypass valves 28a-28c and the induction valves 29a-29d according to the operating conditions of the plant 1, which are detected using measurements of operating quantities and current values of status signals, supplied by the acquisition module 9. The pressure set points are calculated according to a so-called "sliding pressure-type" control, as will be explained in detail below.

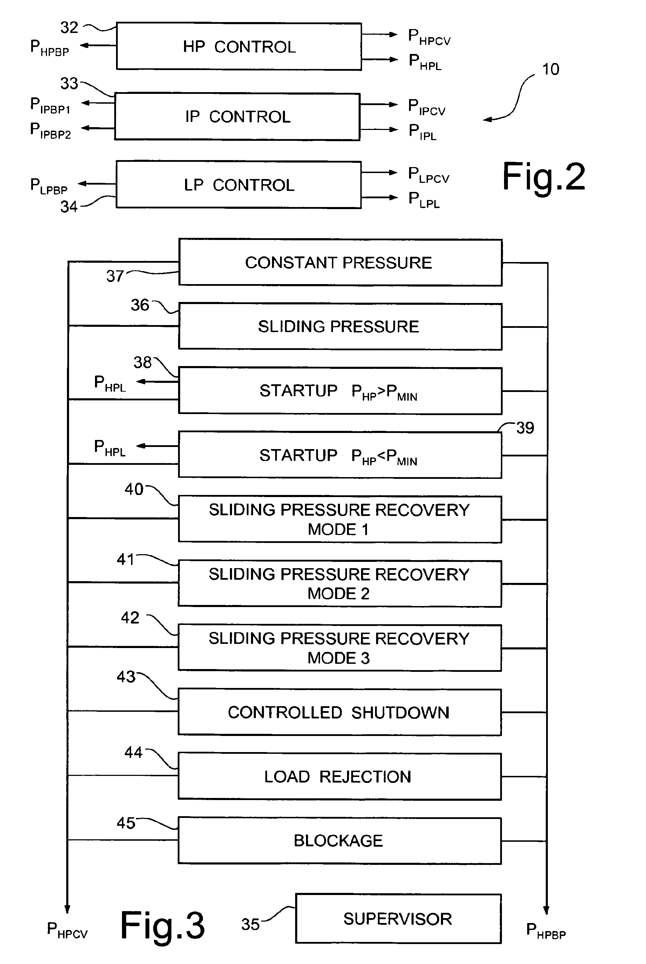

With reference to figure 2, the control device 10 comprises a high-pressure control stage 32, an intermediate-pressure control stage 33 and a low-pressure control stage 34. The intermediate-pressure control stage 33 essentially works in the same manner as the high-pressure control stage 32 and thus will not be deeply discussed. It is however understood that the description regarding the high-pressure control stage 32 also applies to the intermediate-pressure control stage 33.

Figure 3 shows a block diagram related to the high-pressure control stage 32, which comprises a supervisor module 35 and a plurality of operating modules, selectively activable by the supervisor module 35 according to the operating conditions of the plant 1.

In the embodiment described herein, the operating modules comprise:

a sliding pressure module 36;
a constant pressure module 37;
a first start-up module 38;
a second start-up module 39;
a first recovery module 40;
a second recovery module 41;
a third recovery module 42;
a controlled shutdown module 43;
a load rejection module 44; and
a blockage module 45.

Each operating module, when activated by the supervisor module 35, supplies an inlet pressure set point $P_{HPCV}$ and a bypass pressure set point $P_{HPBP}$, for the regulator 30 of the high-pressure inlet valve 27a and of the high-pressure bypass valve 28a, respectively. The operating modules actually supply an induction pressure set point $P_{HPL}$ for the regulator 30 of the high-pressure induction valve 29a. Normally, however, the induction pressure set point $P_{HPL}$ is such to keep the high-pressure induction valve 29a closed, which in practice only intervenes during the first steps of starting-up. For this reason, in figure 3 the induction pressure set point $P_{HPL}$ is indicated only for the first start-up module 38 and for the second start-up module 39.

The operating conditions of the plant 1 are detected by the supervisor module 35 on the basis of measurements of a plurality of operating quantities, including the high-pressure steam flow rate $Q_{HP}$ at the outlet of the superheater 23 of the high-pressure element 15 of the steam generator 7 and the steam pressure upstream of the high-pressure inlet valve 27a and of the high-pressure bypass valve 28a (controlled pressure $P_{HP}$).

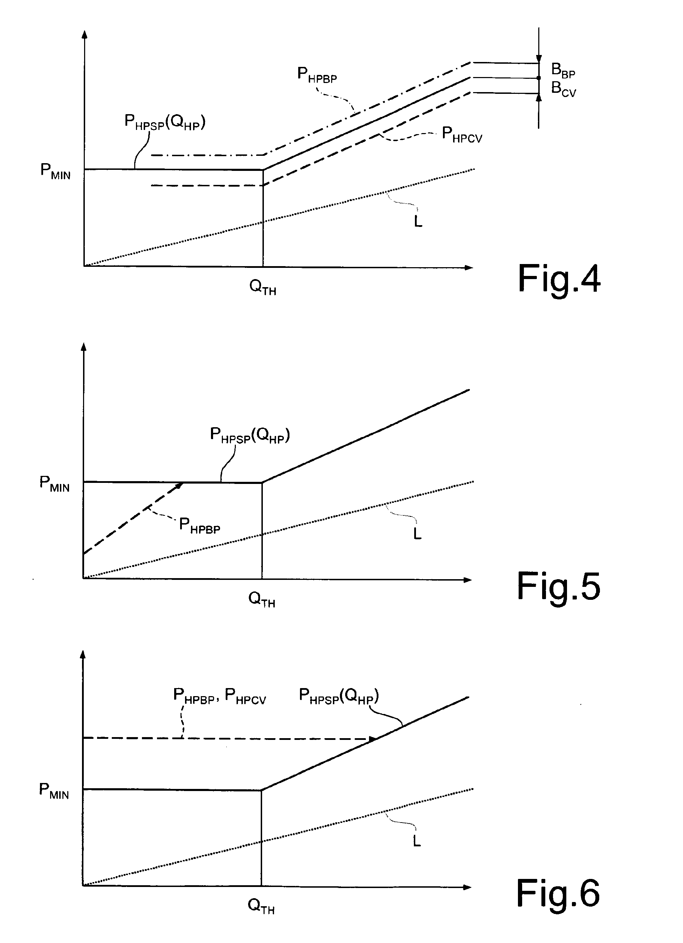

In ordinary operating conditions, the supervisor module 35 activates the sliding pressure module 36 which applies the normal control mode, i.e. the sliding pressure control mode. Specifically, the inlet pressure set point $P_{HPCV}$ is determined according to the flow rate of high-pressure steam $Q_{HP}$, which indicates the current load of the gas turbine 2, so that the controlled pressure $P_{HP}$ follows a predetermined operating curve $P_{HPSP}$ $(Q_{HP})$, qualitatively illustrated by a solid line in figure 4 (the load L of the gas turbine 2 is qualitatively shown with a dotted line in figure 4). The operating curve $P_{HPSP}(Q_{HP})$ displays a first constant segment, at a minimum value

$P_{MIN}$, for values of the high-pressure steam flow rate $Q_{HP}$ lower than a threshold $Q_{TH}$ which corresponds to approximately half a nominal flow rate value. For values higher than the threshold $Q_{TH}$, the operating curve $P_{HPSP}(Q_{HP})$ has a second increasing segment. In the embodiment described herein, the second segment of the operating curve $P_{HPSP}(Q_{HP})$ is essentially linear with respect to the high-pressure steam flow rate $Q_{HP}$ and corresponds to the natural pressure upstream of the high-pressure inlet valve 27a, i.e. with the high-pressure inlet valve 27a fully open.

The inlet pressure set point $P_{HPCV}$ provided by the sliding pressure module 36 is determined from the operating curve $P_{HPSP}(Q_{HP})$ in the following manner:

$$P_{HPCV} = P_{HPSP}(Q_{HP}) - B_{CV}$$

where $B_{CV}$ is an inlet bias. The inlet pressure set point $P_{HPCV}$ is thus slightly lower than the operating curve $P_{HPSP}(Q_{HP})$, so that the high-pressure inlet valve 27a tends to remain fully open in normal operating conditions, with the high-pressure steam flow rate $Q_{HP}$ higher than the threshold $Q_{TH}$.

The bypass pressure set point $P_{HPBP}$ is instead determined as follows, in order to maintain the high-pressure bypass valve 28a always closed, but at the opening limit:

$$P_{HPBP} = P_{HPSP}(Q_{HP}) + B_{EP}$$

where $B_{EP}$ is a bypass bias.

Therefore, in practice, both the inlet pressure set point $P_{HPCV}$ and the bypass pressure set point $P_{HPBP}$ follow the operating curve $P_{HPSP}(Q_{HP})$, according to the value of the high-pressure steam flow rate $Q_{HP}$.

The sliding pressure module 36 is deactivated when the plant 1 is started up and when abnormal operating conditions occur.

The high-pressure steam flow rate $Q_{HP}$ is absent when the gas turbine 2 is started. However, the pressure upstream of the high-pressure inlet valve 27a and of the high-pressure bypass valve 28a, i.e. the controlled pressure $P_{HP}$, may be kept at values even higher than the minimum pressure $P_{MIN}$, generally according to the time elapsed between the shutdown and the restart of the gas turbine 2.

The supervisor module 35 selectively activates the first start-up module 38 or the second start-up module 39 according to whether the controlled pressure $P_{HP}$ is lower than or higher than the minimum pressure $P_{MIN}$, respectively.

In the first case, the start-up module 38 provides an induction set point pressure $P_{HPL}$ for the regulator 30 of the high-pressure induction valve 29a so as to increase the controlled pressure $P_{HP}$, until the pressure control passes to the high-pressure bypass valve 28a. Thus, the first start-up module 37 controls the high-pressure induction valve 29a closing and determines increasing values of the bypass pressure set point $P_{HPBP}$, so that the controlled pressure $P_{HP}$ increases as the load L of the gas turbine 2 increases, essentially as shown in figure 5. When the controlled pressure $P_{HP}$ reaches the minimum pressure $P_{MIN}$, the supervisor module 35 deactivates the first start-up module 38 and selects the sliding pressure module 36.

On the other hand, if the initial controlled pressure $P_{HP}$ is higher than the minimum pressure $P_{MIN}$, the supervisor module 35 activates the second start-up module 39. In this case (figure 6), the bypass pressure set point $P_{HPBP}$ and the inlet pressure set point $P_{HPCV}$ are kept constant as the high-pressure steam load $Q_{HP}$ and the load L of the gas turbine 2 vary, as long as the controlled pressure $P_{HP}$ intercepts the operating curve $P_{HPSP}(Q_{HP})$. More specifically, during an initial step of the starting manoeuvre, the high-pressure inlet valve 27a is closed and the control is performed by the high-pressure bypass valve 28a, with a constant bypass pressure set point $P_{HPBP}$. Subsequently, the control is performed by the high-pressure inlet valve 27a, with an always constant inlet pressure set point $P_{HPCV}$, while the high-pressure bypass valve 28a tends to close.

Also in this case, once the operating curve $P_{HPSP}(Q_{HP})$ has been reached, and thus the normal operating conditions, the supervisor module 35 activates the sliding pressure module 36.

When predetermined abnormal conditions occur, which can be identified by either alarm values of the high-pressure steam flow rate $Q_{HP}$ and of the controlled pressure $P_{HP}$, or values or sets of values of status signals of the plant 1, the supervisor module 35 activates the constant pressure module 37. For example, a condition which determines the activation of the constant pressure module 37 is given by invalid measurements of the high-pressure steam flow rate $Q_{HP}$.

When the constant pressure module 37 is active, the inlet pressure set point $P_{HPCV}$ is constant, regardless of the high-pressure steam flow rate $Q_{HP}$ and of the load L of the gas turbine 2. Furthermore, the bypass pressure set point $P_{HPBP}$ is equal to the inlet pressure set point $P_{HPCV}$, increased by the bypass bias $B_{BP}$.

As soon as the abnormal operating conditions have been removed, the supervisor module 35 automatically allows to return to the sliding pressure control mode by activating the first recovery module 40, the second recovery module 41 or the third recovery module 42, according to the current load L' and to a scheduled load L* of the gas turbine 2. The portion of energy which each operator must introduce into the network is indeed assigned on a daily basis by a governing authority; the load of the plants is scheduled over a day according to the portion which belongs to the operator. The supervisor module 35 is configured to accept and perform a possible request by the operator with priority. It is worth noting that after a period in which the sliding pressure control module has been excluded, upon load variations of the gas turbine 2, the controlled pressure $P_{HP}$ usually departs from the operating curve $P_{HPSP}(Q_{HP})$.

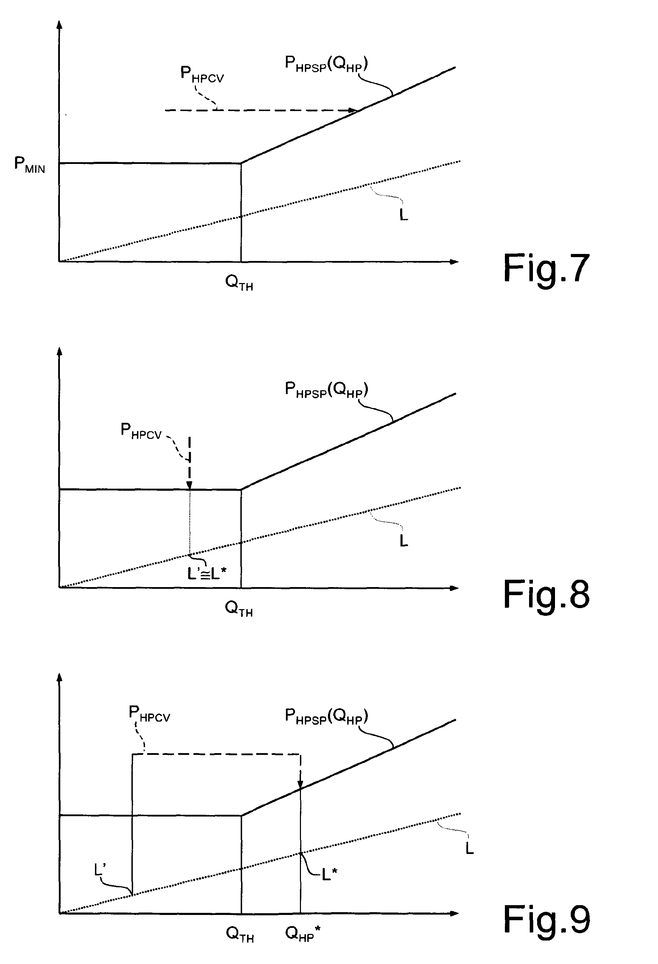

If the scheduled load L* is sufficient to return the controlled pressure $P_{HP}$ to the operating curve $P_{HPSP}(Q_{HP})$ without depressurizing the steam generator 7, the supervisor module 35 uses the first recovery module 40. In practice, with the first recovery module 40 activated (figure 7), the inlet pressure set point $P_{HPCV}$ is kept constant to the initial value of the controlled pressure $P_{HP}$ until, with the increase of the load L of the gas turbine 2 and of the high-pressure steam flow rate $Q_{HP}$, the controlled pressure $P_{HP}$ intercepts the operating curve $P_{HPSP}(Q_{HP})$ again. At this point, the supervisor module 35 excludes the first recovery module 40 and activates the sliding pressure module 36. In this manner, as for the start up with controlled pressure $P_{HP}$ higher than the minimum pressure $P_{MIN}$, the depressurization of the drum 21 of the high-pressure element 15 of the steam generator 7 is advantageously avoided.

The second recovery module 41 and the third recovery module 42 are activated when the scheduled load L for the gas turbine 2 is not temporarily sufficient to reach the operating curve $P_{HPSP}(Q_{HP})$ thus keeping constant the inlet pressure set point $P_{HPCV}$.

More specifically (figure 8), the second recovery module 41 is activated when the current load L' of the gas turbine 2 is close to the scheduled load L*. The second recovery module 41 reduces the inlet pressure set point $P_{HPCV}$ for depressurizing the drum 21 of the high-pressure element 15 of the steam generator 7 until the controlled pressure $P_{HP}$ intercepts the operating curve $P_{HPSP}(Q_{HP})$, regardless of the value of the high-pressure steam flow rate $Q_{HP}$ with respect to the threshold $Q_{TH}$. Thus the supervisor module 35 activates the sliding pressure module 36 again.

If the scheduled load L* of the gas turbine 2 is higher than the current load L' and allows to intercept the increasing branch of the operating curve $P_{HPSP}(Q_{HP})$, although at a lower pressure than the current value of the controlled pressure $P_{HP}$, the third recovery module 42 is activated and performs a partial depressurization (figure 9). Specifically, the third recovery module 42 keeps the inlet pressure set point $P_{HPCV}$ constant, until the current load L' reaches the scheduled load L*, and thus reduces it until the operating curve $P_{HPSP}(Q_{HP})$ is intercepted. The supervisor module activates the sliding pressure module 36 again when the described condition occurs.

The supervisor module 35 activates the controlled shutdown module 43 in case of controlled (or scheduled) shutdown of the gas turbine 2. In this case, the load L of the gas turbine 2, and thus also of the high-pressure steam flow rate $Q_{HP}$, is gradually reduced to shutdown. The controlled shutdown conditions of the gas turbine 2 are recognized by the supervisor module 35, which detects a specific status signal at a value indicating the occurring shutdown.

In case of load rejection, the supervisor module activates the load rejection module 44. In load rejection conditions, the gas turbine 2 remains in operation, but is disconnected from the electric network and works in speed control, feeding only the plant auxiliaries. Accordingly, the load is minimum.

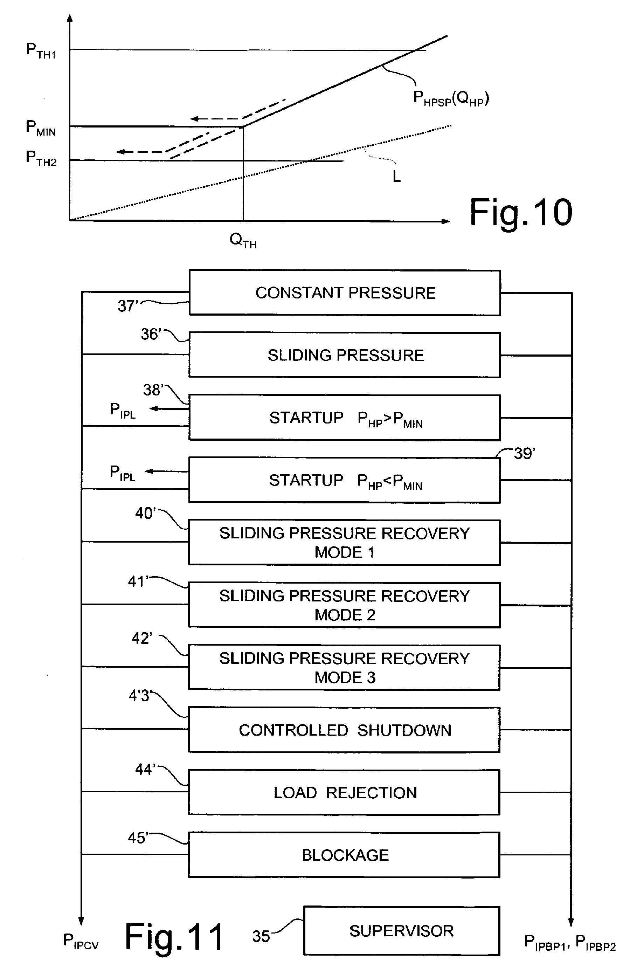

With both the controlled shutdown module 43 and the load rejection module 44 (figure 10), the inlet pressure set point $P_{HPCV}$ and, subsequently, the bypass pressure set point $P_{HPBP}$, are determined on the basis of the operating curve $P_{HPSP}(Q_{HP})$, which ensures the depressurization of the high-pressure element 15 of the steam generator 7. Possible different requests by an operator are ignored. In this manner, the condition of high pressure in the drum 21 of the high-pressure element 15 is avoided in conjunction with a low temperature of the exhaust fumes of the gas turbine 2, which operates with a reduced load L. The described condition is particularly detrimental in the case of load rejection, because it can be continued for an undetermined, even very long, time. Indeed, the combination of high-pressure and low temperature may cause the condensation of the steam in the steam generator 7, with possible mechanical stresses. On the other hand, in case of controlled shutdown of the gas turbine 2, the condition is only transient in view of the complete shutdown, and thus the risk of damages due to the condensation of steam is intrinsically lower. However, the use of the sliding pressure control further reduces such risks.

Furthermore, the controlled shutdown module 43 and the load rejection module 44 lead the controlled pressure below a first threshold $P_{TH1}$, in case of shutdown of the gas turbine 2, and below a second threshold $P_{TH2}$, lower than the first threshold $P_{TH1}$, in case of load rejection, respectively.

The blockage module 45 is automatically selected in case of blockage of the gas turbine 2. Such a condition is recognized on the basis of a flame presence signal of the gas turbine 2. The blockage module 45 sets the inlet pressure set point $P_{HPCV}$ by tracking the current value of the pressure measured upstream of the high-pressure inlet valve 27a and of the high-pressure bypass valve 28a, which in this condition may not be controlled. Furthermore, the bypass pressure set point $P_{HPBP}$ is increased by a bypass bias $B_{BP}$ to determine the closing of the bypass valve 28a and thus to preserve the pressure of the high-pressure element 15 of the steam generator 7 at the highest value until the next restart of the plant 1.

As previously, mentioned, the above described is also applied essentially without any variation to the intermediate-pressure control stage 33, which is only diagrammatically shown in figure 11. The intermediate-pressure control stage 33 comprises a supervisor module 35' and a plurality of operating modules including: a sliding pressure module 36'; a constant pressure module 37'; a first start-up module 38'; a second start-up module 39'; a first sliding pressure recovery module 40'; a second sliding pressure recovery module 41'; a third sliding pressure recovery module 42'; a controlled shutdown module 43'; a load rejection module 44'; and a blockage module 45'.

Each operating module, when activated by the supervisor module 35', provides an inlet pressure set point $P_{IPCV}$ and a bypass pressure set point $P_{IPBP}$, for the regulator 30 of the intermediate-pressure inlet valve 27a and for the intermediate-pressure bypass valve 28b, respectively. Furthermore, the operating modules actually provide an induction pressure set point $P_{IPL}$ for the regulators 30 of the intermediate-pressure induction valves 29b1, 29b2.

The intermediate-pressure control stage 13 also works on the basis of a sliding pressure-type control, using an operating curve $P_{IPSP}(Q_{HP})$ similar to the operating curve $P_{HPSP}(Q_{HP})$ of the high-pressure control stage 12. The operating curve $P_{IPSP}(Q_{HP})$ is also expressed according to the high-pressure steam flow rate $Q_{HP}$.

The low-pressure control stage 34 further generates pressure set points for the regulators 30 of the low-pressure inlet valve 27c, the low-pressure bypass valve 28c and the low-pressure induction valve 29c. The pressure set points for the regulators of the valves 27c, 28c are generated according to a "constant pressure-type" control.

The described control device allows to advantageously increase the level of automation in controlling the combined cycle plants, specifically with regards to steam turbines. The control device is indeed able to recognize plant operating conditions on the basis of detected parameters and status signals and to consequently select the most appropriate operating mode, in terms of both efficiency and safety.

It is finally apparent that changes and variations may be made to the described method, device and plant without departing from the scope of the present in induction ion as defined in the appended claims.

**Claims**

1. A device for controlling a stean turbine of a combined cycle plant and a bypass system thereof comprising:

   an acquisition module (9), to acquire measurements of operating quantities ($Q_{HP}$, $P_{HP}$) of a combined cycle plant (1) including a gas turbine (2) and a steam turbine (3);
   a plurality of calculation modules (36-45), configured to determine, according to correspcnding control modes, at least one of a first pressure set point $P_{HPCV}$) for a regulator (30) of a high-pressure inlet valve (27a) of a high-pressure section (12) of the steam turbine (3) and a second pressure set point ($P_{IPCV}$) for a regulator (30) of an intermediate-pressure inlet valve (27b) of an intermediate-pressure section (13) of the steam turbine (3), and at least one of a third pressure set point ($P_{HPBP}$) for a regulator (30) of a high-pressure bypass valve (28a) of the high-pressure section (12) of the steam turbine, (3) and a fourth pressure set point ($P_{IPBP}$) for a regulator (30) of intermediate-pressure bypass valve (28b) of the intermediate-pressure section (13) of the steam turbine (3); and
   a supervisor module (35), configured to detect an operating condition of the plant (1) on the basis of the operating quantities ($Q_{HP}$, $P_{HP}$) acquired by the acquisition module, (9) and to selectively activate one of the calculation modules (36-45) in response to the detected operating condition;
   **characterized in that** the operating quantities ($Q_{HP}$, $P_{HP}$) comprise a high-pressure steam flow rate ($Q_{HP}$), supplied by a high-pressure element (15) of a steam generator (7) of the plant (1), and a controlled pressure ($P_{HP}$), upstream of the high-pressure inlet valve (27a) and the high-pressure bypass valve (28a), and wherein the calculation modules (36-45) comprise a sliding pressure module (36), configured to determine the first pressure set point ($P_{HPCV}$) according to an operating curve ($P_{HPSP}(Q_{HP})$) having a first constant segment, at a minimum pressure value ($P_{MIN}$), when the high-pressure steam flow rate ($Q_{HP}$) is lower than a flow rate threshold ($Q_{TH}$), and a second increasing segment with respect to the high-pressure steam flow rate ($Q_{HP}$), when the high-pressure steam flow rate ($Q_{HP}$) is higher than the flow rate threshold ($Q_{TH}$).

2. A device according to claim 1, wherein the second segment of the operating curve ($P_{HPSP}(Q_{HP})$) is essentially linear with respect to the high-pressure steam flow rate ($Q_{HP}$).

3. A device according to claim 1 or 2, wherein the sliding pressure module (36) is configured to determine the first pressure set point ($P_{HPCV}$) of the operating curve $P_{HPSP}(Q_{HP})$ on the basis of the equation

$$P_{HPCV} = P_{HPSP}(Q_{HP}) - B_{CV}$$

where $P_{HPCV}$ is the first pressure set point, $P_{HPSP}(Q_{HP})$ is the operating curve and $B_{CV}$ is a first bias value.

4. A device according to anyone of the foregoing claims, wherein the sliding pressure module (36) is configured to determine the third pressure set point ($P_{HPBP}$) of the operating curve $P_{HPSP}(Q_{HP})$ on the basis of the equation

$$P_{HPBP} = P_{HPSP}(Q_{HP}) + B_{BP}$$

where $P_{HPBP}$ is the third pressure set point, $P_{HPSP}$ $(Q_{HP})$ is the operating curve and $B_{BP}$ is a second bias value.

5. A device according to anyone of the foregoing claims, wherein the calculation modules (36-45) comprise a first start-up module (38) and a second start-up module (39), selectively activatable by the supervisor module (35) to pressurize the steam generator 7, when the controlled pressure ($P_{HP}$) is lower than the minimum pressure value ($P_{MIN}$), and to maintain the controlled pressure ($P_{HP}$) until the operating curve $P_{HPSP}(Q_{HP})$ is reached, when the controlled pressure ($P_{HP}$) is higher than the minimum pressure value ($P_{MIN}$), respectively.

6. A device according to claim 5, wherein the first start-up module (38) is configured to supply increasing values of the third pressure set pcint ($P_{HPBP}$) so that the controlled pressure ($P_{HP}$) increases with the increase of the load (L) of the gas turbine (2).

7. A device according to claim 5 or 6, wherein the second start-up module (39) is configured to keep the first pressure set point ($P_{HPCV}$) and the third pressure set point ($P_{HPBP}$) constant, upon the variation of the high-pressure steam flow rate ($Q_{HP}$).

8. A device according to anyone of the foregoing claims, wherein the calculation modules (36-45) comprise a first recovery module (40), a second recovery module (41) and a third recovery module (42), selectively activatable by the supervisor module (35) in response to the detection to return the controlled pressure ($P_{HP}$) to the operating curve ($P_{HPSP}(Q_{HP})$).

9. A device according to claim 8, wherein the first recovery module (40) is configured to keep the first pressure set point ($P_{HPCV}$) constant.

10. A device according to claim 8 or 9 wherein the second recovery module (41) is configured to reduce the first pressure set point ($P_{HPCV}$) until the operating curve $P_{HPSP}(Q_{HP})$ is intercepted.

11. A device according to anyone of the claims from 8 to 10, wherein the third recovery module (42) is configured to keep the first pressure set point ($P_{HPCV}$) constant, until a current load (L') of the gas turbine (2) is lower than the scheduled load (L*), and to reduce the first pressure set point ($P_{HPCV}$) until the operating curve $P_{HPSP}(Q_{HP})$ is intercepted, after the current load (L') has reached the scheduled load (L*).

12. A device according to anyone of the foregoing claims, wherein the calculation modules further comprise:

a controlled shutdown module (43), selectively activatable in response to a controlled shutdown of the gas turbine (2) and configured to determine the first pressure set point ($P_{HPCV}$) and, subsequently, the third pressure set point ($P_{HPBP}$) on the basis of the operating curve $P_{HPSP}(Q_{HP})$ ;
a load rejection module (44), selectively activatable in response to a load rejection of the gas turbine (2) and configured to determine the first pressure set point ($P_{HPCV}$) and, subsequently, the third pressure set point ($P_{HPBP}$) on the basis of the operating curve $P_{HPSP}(Q_{HP})$; and
a blockage module (45), selectively activatable in response to a blockage of the gas turbine (2).

13. A device according to anyone of the foregoing claims, comprising a plurality of further calculation modules (36'-45'), configured to determine, according to corresponding control modes, at least one third pressure set point ($P_{IPCV}$) for a regulator (30) of an intermediate-pressure inlet valve (27b) and a fourth pressure set point ($P_{IPBP}$) for a regulator (30) of an intermediate-pressure bypass valve (28b) of an intermediate-pressure section (13) of the steam turbine (3);
wherein the supervisor module (35) is configured to selectively activate one of the further calculation modules (36'-45') in response to the detected operating condition.

14. A device according to claim 12 wherein the calculation modules (36'-45') comprise:

a further sliding pressure module (36');
a further constant pressure module (37');
a further first start-up module (38');
a further second start-up module (39');
a further first recovery module (40');
a further second recovery module (41');
a further third recovery module (42');
a further controlled shutdown module (43');
a further load rejection module (44'); and
a further blockage module (45').

**Patentansprüche**

1. Vorrichtung zum Steuern einer Dampfturbine eines Kombikraftwerkes und eines Bypasssystems davon, umfassend:

ein Erfassungsmodul (9) zum Erfassen von Messungen von Betriebsgrößen ($Q_{HP}$, $P_{HP}$) von einem Kombikraftwerk (1) mit einer Gasturbine (2) und einer Dampfturbine (3);

mehrere Berechnungs-Module (36-45), die dazu ausgelegt sind, um entsprechend zu korrespondierenden Steuermodi wenigstens einen von einem ersten Druck-Einstellpunkt ($P_{HPCV}$) für einen Regler (30) von einem Hochdruck-Einlassventil (27a) von einem Hochdruck-Abschnitt (12) von der Dampfturbine (3) und einem zweiten Druck-Einstellpunkt ($P_{IPCV}$) für einen Regler (30) von einem Mitteldruck-Einlassventil (27b) von einem Mitteldruck-Abschnitt (13) von der Dampfturbine (3) zu bestimmen, und wenigstens einen von einem dritten Druck-Einstellpunkt ($P_{HPBP}$) für einen Regler (30) von einem Hochdruck-Bypassventil (28a) von dem Hochdruck-Abschnitt (12) von der Dampfturbine (3) und einem vierten Druck-Einstellpunkt ($P_{IPEP}$) für einen Regler (30) von einem Mitteldruck-Bypassventil (28b) von dem Mitteldruck-Abschnitt (13) von der Dampfturbine (3); und

ein Überwachungs-Modul (35), das ausgelegt ist, um einen Betriebszustand der Anlage (1) auf Basis der Betriebsgrößen ($Q_{HP}$, $P_{HP}$), die über das Erfassungsmodul (9) erfasst sind, zu erfassen und um wahlweise eines von den Berechnungs-Modulen (36-45) in Reaktion auf den erfassten Betriebszustand zu aktivieren; **dadurch gekennzeichnet, dass** die Betriebsgrößen ($Q_{HP}$, $P_{HP}$) eine Hochdruck-Dampfflussrate ($Q_{HP}$), die über ein Hochdruck-Element (15) von einem Dampfgenerator (7) von der Anlage (1) zugeführt wird, und einen gesteuerten Druck ($P_{HP}$), oberhalb von dem Hochdruck-Einlassventil (27a) und dem Hochdruck-Bypassventil (28a), umfassen, und wobei die Berechnungsmodule (36-45) ein gleitendes Druckmodul (36) umfassen, das ausgelegt ist, um den ersten Druck-Einstellpunkt ($P_{HPCV}$) gemäß einer Betriebskennlinie ($P_{HPSP}(Q_{HP})$), die einen ersten konstanten Abschnitt umfasst, bei einem Minimum-Druckwert ($P_{MIN}$), wenn die Hochdruck-Dampfflussrate ($Q_{HP}$) niedriger ist als ein Flussraten-Grenzwert ($Q_{TH}$), zu bestimmen und einen zweiten ansteigenden Abschnitt bezüglich der Hochdruck-Dampfflussrate ($Q_{HP}$), wenn die Hochdruck-Dampfflussrate ($Q_{HP}$) größer ist als der Flussraten-Grenzwert ($Q_{TH}$), zu bestimmen.

2. Vorrichtung gemäß Anspruch 1, bei der der zweite Abschnitt der Betriebskennlinie ($P_{HPSP}(Q_{HP})$) im Wesentlichen linear bezüglich der Hochdruck-Dampfflussrate ($Q_{HP}$) ausgebildet ist.

3. Vorrichtung gemäß Anspruch 1 oder 2, bei der das gleitende Druckmodul (36) ausgelegt ist, um den ersten Druck-Einstellpunkt ($P_{HPCV}$) der Betriebskennlinie ($P_{HPSP}(Q_{HP})$) auf der Basis der Gleichung

$$P_{HPCV} = P_{HPSP}(Q_{HP}) - B_{CV}$$

zu bestimmen, wobei $P_{HPCV}$ der erste Druck-Einstellpunkt ist, $P_{HPSP}(Q_{HP})$ die Bedienkennlinie und $P_{CV}$ der erste Biaswert ist.

4. Vorrichtung gemäß einem der vorstehenden Ansprüche, bei der das gleitende Druckmodul (36) ausgelegt ist, um den dritten Druck-Einstellpunkt ($P_{HPBP}$) der Betriebskennlinie ($P_{HPSP}(Q_{HP})$ auf der Basis der Gleichung

$$P_{HPBP} = P_{HPSP}(Q_{HP}) + P_{BP}$$

zu bestimmen, wobei $P_{HPBP}$ der dritte Druck-Einstellpunkt ist, $P_{HPSP}(Q_{HP})$ die Betriebskennlinie und $P_{BP}$ ein zweiter Biaswert ist.

5. Vorrichtung gemäß einem der vorstehenden Ansprüche, bei der die Berechnungsmodule (36-45) ein erstes Anfahr-Modul (38) und ein zweites Anfahr-Modul (39) umfassen, die wahlweise über das Überwachungsmodul (35) aktivierbar sind, um den Dampfgenerator (7) mit Druck zu beaufschlagen, wenn der gesteuerte Druck ($P_{HP}$) geringer ist als der Minimum-Druckwert ($P_{MIN}$), und um den gesteuerten Druck ($P_{HP}$) aufrechtzuerhalten, bis die Betriebskennlinie ($P_{HPSP}(Q_{HP})$ erreicht ist, wenn jeweils der gesteuerte Druck ($P_{HP}$) höher ist als der Minimum-Druckwert ($P_{MIN}$) ist.

6. Vorrichtung gemäß Anspruch 5, bei der das erste Anfahr-Modul (38) ausgelegt ist, um ansteigende Werte von dem dritten Druck-Einstellpunkt ($P_{HBPB}$) derart zuzuführen, dass der gesteuerte Druck ($P_{HP}$) mit dem Anstieg der Last (L) der Gasturbine (2) ansteigt.

7. Vorrichtung gemäß Anspruch 5 oder 6, bei der das zweite Anfahr-Modul (39) ausgelegt ist, um den ersten Druck-Einstellpunkt ($P_{HPCV}$) und den dritten Druck-Einstellpunkt ($P_{HPBP}$) bei der Schwankung der Hochdruck-Dampfflussrate ($Q_{HP}$) konstant zu halten.

8. Vorrichtung gemäß einem der vorstehenden Ansprüche, bei der die Berechnungsmodule (36-45) jeweils ein erstes Wiederherstellungs-Modul (40), ein zweites Wiederherstellungsmodul (41) und ein drittes Wiederherstellungs-Modul (42) umfassen, die wahlweise über das Überwachungs-Modul (35) in Reaktion auf die Erfassung den gesteuerten Druck ($P_{HP}$) zu der Betriebskennlinie ($P_{HPSP}$ ($Q_{HP}$)) zurückzuführen aktivierbar ist.

9. Vorrichtung gemäß Anspruch 8, bei der das erste Wiederherstellungs-Modul (40) ausgelegt ist, um den ersten Druck-Einstellpunkt ($P_{HPCV}$) konstant zu halten.

10. Vorrichtung gemäß Anspruch 8 oder 9, bei der das zweite Wiederherstellungs-Modul (41) ausgelegt ist, um den ersten Druck-Einstellpunkt ($P_{HPCV}$) zu reduzieren bis zu der Betriebskennlinie ($P_{EPSP}$ ($Q_{HP}$) geschnitten ist.

11. Vorrichtung gemäß einem der Ansprüche 8 bis 10, bei der das dritte Wiederherstellungs-Modul (42) derart ausgelegt ist, um den ersten Druck-Einstellpunkt ($P_{HPCV}$) konstant zu halten, bis eine gegenwärtige Last (L') der Gasturbine geringer ist, als die vorgesehene Last (L*), und um den ersten Druck-Einstellpunkt ($P_{HPCV}$) zu reduzieren, bis die Betriebskennlinie ($P_{HPSP}$ ($Q_{HP}$)) geschnitten ist, nachdem die gegenwärtige Last (L') die geplante Last (L*) erreicht hat.

12. Vorrichtung gemäß einem der vorstehenden Ansprüche, bei der die Berechnungsmodule weiter umfassen:

    ein gesteuertes Herunterfahr-Modul (43), das wahlweise in Reaktion auf ein gesteuertes Herunterfahren der Gasturbine (2) aktivierbar ist und das ausgelegt ist, um den ersten Druck-Einstellpunkt ($P_{HPCV}$) und anschließend den dritten Druck-Einstellpunkt ($P_{HPSP}$) auf der Basis der Betriebskennlinie ($P_{HPSP}$ ($Q_{HP}$) zu bestimmen; ein Last-Zurückweisungsmodul (44), das wahlweise aktivierbar ist in Reaktion auf einen Lastzurückweisung der Gasturbine (2) und das ausgelegt ist, um den ersten Druck-Einstellpunkt ($P_{HPCV}$) zu bestimmen und anschließend den dritten Druck-Einstellpunkt ($P_{HPBP}$) auf der Basis der Betriebskennlinie ($P_{HPSP}$ ($Q_{HP}$); und ein Blockierungs-Modul (45), das wahlweise in Reaktion auf eine Blockierung der Gasturbine (2) aktivierbar ist.

13. Vorrichtung gemäß einem der vorstehenden Ansprüche, umfassend mehrere weitere Berechnungsmodule (36'-45'), die ausgelegt sind, um gemäß korrespondierenden Steuermodi wenigstens einen dritten Druck-Einstellpunkt ($P_{IPCV}$) für einen Regler (30) von einem Mitteldruck-Einlassventil (27b) und einen vierten Druck-Einstellpunkt ($P_{IPBP}$) für einen Regler (30) von einem Mitteldruck-Bypass-Ventil (28b) von einem Mitteldruck-Abschnitt (13) von der Dampfturbine (3) zu bestimmen; wobei das Überwachungsmodul (35) ausgelegt ist, um wahlweise eines der weiteren Berechnungsmodule (36'-45') in Reaktion auf den erfassten Betriebszustand zu aktivieren.

14. Vorrichtung gemäß Anspruch 12, bei der die Berechnungsmodule (36'-45') umfassen:

    ein weiteres gleitendes Druckmodul (36');
    ein weiteres konstantes Druckmodul (37');
    ein weiteres erstes Anfahr-Modul (38');
    ein weiteres zweites Anfahr-Modul (39');
    ein weiteres erstes Wiederherstellungs-Modul (40');
    ein weiteres zweites Wiederherstellungs-Modul (41');
    ein weiteres drittes Wiederherstellungs-Modul (42');
    ein weiteres gesteuertes Herunterfahr-Modul (43');
    ein weiteres Last-Zurückweisungsmodul (44'); und
    ein weiteres Blockierungs-Modul (45').


**Revendications**

1. Dispositif de commande d'une turbine à vapeur d'une centrale à cycle combiné et son système de dérivation comprenant :

    un module d'acquisition (9), pour acquérir des mesures de grandeurs opérationnelles ($Q_{HP}$, $P_{HP}$) d'une centrale à cycle combiné (1) comportant une turbine à gaz (2) et une turbine à vapeur (3) ;
    une pluralité de modules de calcul (36-45), configurés pour déterminer, selon des modes de commande correspondants, au moins un point parmi un premier point de réglage de pression ($P_{HPCV}$) pour un régulateur (30) d'une soupape d'admission à haute pression (27a) d'une section à haute pression (12) de la turbine à vapeur (3) et un deuxième point de réglage de pression ($P_{IPCV}$) pour un régulateur (30) d'une soupape d'admission à pression intermédiaire (27b) d'une section à pression intermédiaire (13) de la turbine à vapeur (3), et au moins un point parmi un troisième point de réglage de pression ($P_{HPEP}$) pour un régulateur (30) d'une soupape de dérivation à haute pression (28a) de la section à haute pression (12) de la turbine à vapeur (3) et un quatrième point de réglage de pression ($P_{IPBP}$) pour un régulateur (30) d'une soupape de dérivation à pression intermédiaire (28b) de la section à pression intermédiaire (13) de la turbine à vapeur (3) ; et

un module de supervision (35), configuré pour détecter un état de fonctionnement de la centrale (1) sur la base des grandeurs opérationnelles ($Q_{HP}$, $P_{HP}$) acquises par le module d'acquisition (9) et pour activer sélectivement l'un des modules de calcul (36-45) selon l'état de fonctionnement détecté ;

**caractérisé en ce que** les grandeurs opérationnelles ($Q_{HP}$, $P_{HP}$) comprennent un débit de vapeur à haute pression ($Q_{RP}$), fourni par un élément de haute pression (15) d'un générateur de vapeur (7) de la centrale (1), et une pression commandée ($P_{RP}$), en amont de la soupape d'admission à haute pression (27a) et de la soupape de dérivation à haute pression (28a), et où les modules de calcul (36-45) comprennent un module de pression glissante(36), configuré pour déterminer le premier point de réglage de pression ($P_{HPCV}$) selon une courbe de fonctionnement ($P_{HPSP}$ ($Q_{HP}$)) ayant un premier segment constant, à une valeur de pression minimale ($P_{MIN}$), lorsque le débit de vapeur à haute pression ($Q_{HP}$) est inférieur à un débit seuil ($Q_{TH}$), et un deuxième segment croissant par rapport au débit de vapeur à haute pression ($Q_{HP}$), lorsque le débit de vapeur à haute pression ($Q_{HP}$) est supérieur au débit seuil ($Q_{TH}$).

2. Dispositif selon la revendication 1, dans lequel le deuxième segment de la courbe de fonctionnement ($P_{HPSP}$ ($Q_{HP}$)) est essentiellement linéaire par rapport au débit de vapeur à haute pression ($Q_{HP}$).

3. Dispositif selon la revendication 1 ou 2, dans lequel le module de pression glissante (36) est configuré pour déterminer le premier point de réglage de pression ($P_{HPCV}$) de la courbe de fonctionnement ($P_{HPSP}$ ($Q_{HP}$)) sur la base de l'équation

$$P_{HPCV} = P_{HPSP} \ (Q_{HP}) - B_{CV}$$

où $P_{HPCV}$ est le premier point de réglage de pression, $P_{HPSP}$ ($Q_{HP}$) est la courbe de fonctionnement et $B_{CV}$ est une première valeur de biais.

4. Dispositif selon l'une quelconque des revendications précédentes, où le module de pression glissante (36) est configuré pour déterminer le troisième point de réglage de pression ($P_{HPBP}$) de la courbe de fonctionnement $P_{HPSP}$ ($Q_{HP}$) sur la base de l'équation

$$P_{HPBP} - P_{HPSP} \ (Q_{HP}) + B_{BP}$$

où $P_{HPBP}$ est le troisième point de réglage de pression, $P_{HPSP}$ ($Q_{HP}$) est la courbe de fonctionnement et le $B_{BP}$ est une deuxième valeur de biais.

5. Dispositif selon l'une quelconque des revendications précédentes, où les modules de calcul (36-45) comprennent un premier module de démarrage (38) et un deuxième module de démarrage (39), pouvant être activés au choix par le module de supervision (35) pour pressuriser le générateur de vapeur (7), lorsque la pression commandée ($P_{HP}$) est inférieure à la valeur de pression minimale ($P_{MIN}$), et pour maintenir la pression commandée ($P_{HP}$) tant que la courbe de fonctionnement $P_{HPSP}$ ($Q_{HP}$) n'est pas atteinte, lorsque la pression commandée ($P_{HP}$) est supérieure à la valeur de pression minimale ($P_{MIN}$), respectivement.

6. Dispositif selon la revendication 5, dans lequel le premier module de démarrage (38) est configuré pour fournir des valeurs croissantes au troisième point de réglage de pression ($P_{HPBP}$) de sorte que la pression commandée ($P_{HP}$) augmente avec l'augmentation de la charge (L) de la turbine à gaz (2).

7. Dispositif selon la revendication 5 ou 6, dans lequel le module de démarrage (39) est configuré pour garder constants le premier point de réglage de pression ($P_{HPCV}$) et le troisième point de réglage de pression ($P_{HPBP}$), pendant la variation du débit de vapeur à haute pression ($Q_{HP}$).

8. Dispositif selon l'une quelconque des revendications précédentes, dans lequel les modules de calcul (36-45) comportent un premier module de restauration (40), un deuxième module de restauration (41) et un troisième module de restauration (42), pouvant être activés au choix par le module de supervision (35) en réponse à la détection pour ramener la pression commandée ($P_{HP}$) sur la courbe de fonctionnement ($P_{HPSP}$ ($Q_{HP}$)).

9. Dispositif selon la revendication 8, dans lequel le premier module de restauration (40) est configuré pour garder le premier point de réglage de pression ($P_{HPCV}$) constant.

10. Dispositif selon la revendication 8 ou 9, dans lequel le deuxième module de restauration (41) est configuré pour abaisser le premier point de réglage de pression ($P_{HPCV}$) pour le ramener sur la courbe de fonctionnement $P_{HPSP}$ ($Q_{HP}$) .

11. Dispositif selon l'une quelconque des revendications 8 à 10, dans lequel le troisième module de restauration (42) est configuré pour garder le premier point de réglage de pression ($P_{HPCV}$) constant, jusqu'à ce que la charge actuelle (L') de la turbine à gaz (2) soit plus faible que la charge prévue (L* ) , et pour réduire le premier point de réglage de pression ($P_{HPCV}$) pour le ramener sur la courbe de fonctionnement $P_{HPSP}$ ($Q_{HP}$), après que la charge actuelle (L') a atteint la charge prévue (L*).

**12.** Dispositif selon l'une quelconque des revendications précédentes, dans lequel les modules de calcul comprennent en outre :

un module d'arrêt commandé (43), pouvant être activé au choix en réponse à l'arrêt commandé de la turbine à gaz (2) et configuré pour déterminer le premier point de réglage de pression ($P_{HPCV}$) et, par la suite, le troisième point de réglage de pression ($P_{HPBP}$) sur la base de la courbe de fonctionnement $P_{HPSP}$ ($Q_{HP}$) ;

un module de rejet de charge (44), pouvant être activé au choix en réponse à un rejet de charge de la turbine à gaz (2) et configuré pour déterminer le premier point de réglage de pression ($P_{HPCV}$) et, par la suite, le troisième point de réglage de pression ($P_{HPBP}$) sur la base de la courbe de fonctionnement $P_{HPSP}$ ($B_{PH}$) ; et

un module de blocage (45), pouvant être au choix activé en réponse au blocage de la turbine à gaz (2).

**13.** Dispositif selon l'une quelconque des revendications précédentes, comprenant une pluralité de modules de calcul supplémentaires (36'-45'), configurés pour déterminer, selon les modes de commande correspondants, au moins un troisième point de réglage de pression ($P_{IPCV}$) pour un régulateur (30) d'une soupape d'admission à pression intermédiaire (27b) et un quatrième point de réglage de pression ($P_{IPBP}$) pour un régulateur (30) d'une soupape de dérivation à pression intermédiaire (28b) d'une section à pression intermédiaire (13) de la turbine à vapeur (3) ; dans lequel le module de supervision (35) est configuré pour activer sélectivement l'un des modules de calcul supplémentaires (36'-45') en réponse à l'état de fonctionnement détecté.

**14.** Dispositif selon la revendication 12 où les modules de calcul (36'-45') comprennent :

un module de pression glissante supplémentaire (36') ;

un module de pression constante supplémentaire (37') ;

un premier module de démarrage supplémentaire (38') ;

un deuxième module de démarrage supplémentaire (39') ;

un premier module de restauration supplémentaire (40') ;

un deuxième module de restauration supplémentaire (41') ;

un troisième module de restauration supplémentaire (42') ;

un module d'arrêt commandé supplémentaire (43') ;

un module de rejet de charge supplémentaire (44') ; et

un module de blocage supplémentaire (45').

Fig.1

32 — P$_{HPBP}$ ← | HP CONTROL | → P$_{HPCV}$
→ P$_{HPL}$

10

33 — P$_{IPBP1}$ ← | IP CONTROL | → P$_{IPCV}$
P$_{IPBP2}$ ← → P$_{IPL}$

P$_{LPBP}$ ← | LP CONTROL | → P$_{LPCV}$
34 — → P$_{LPL}$

# Fig.2

| CONSTANT PRESSURE |
37 —
| SLIDING PRESSURE |
36 —
38 —
P$_{HPL}$ ← | STARTUP $P_{HP} > P_{MIN}$ |
39
P$_{HPL}$ ← | STARTUP $P_{HP} < P_{MIN}$ |
40 —
| SLIDING PRESSURE RECOVERY MODE 1 |
41 —
| SLIDING PRESSURE RECOVERY MODE 2 |
42 —
| SLIDING PRESSURE RECOVERY MODE 3 |
43 —
| CONTROLLED SHUTDOWN |
44 —
| LOAD REJECTION |
45 —
| BLOCKAGE |

P$_{HPCV}$ ↓

# Fig.3

35 — | SUPERVISOR |

P$_{HPBP}$ ↓

Fig.4

Fig.5

Fig.6

$P_{HPCV}$

$P_{HPSP}(Q_{HP})$

$P_{MIN}$

L

$Q_{TH}$

**Fig.7**

$P_{HPSP}(Q_{HP})$

$P_{HPCV}$

L

$L'\cong L^*$

$Q_{TH}$

**Fig.8**

$P_{HPCV}$

$P_{HPSP}(Q_{HP})$

$L'$

$L^*$

L

$Q_{TH}$   $Q_{HP}^*$

**Fig.9**

15

$P_{TH1}$

$P_{MIN}$

$P_{TH2}$

$P_{HPSP}(Q_{HP})$

L

$Q_{TH}$

# Fig.10

| CONSTANT PRESSURE |
|---|
37'

| SLIDING PRESSURE |
|---|
36'

$P_{IPL}$ ← | STARTUP $P_{HP} > P_{MIN}$ |
38'

$P_{IPL}$ ← | STARTUP $P_{HP} < P_{MIN}$ |
39'

| SLIDING PRESSURE RECOVERY MODE 1 |
|---|
40'

| SLIDING PRESSURE RECOVERY MODE 2 |
|---|
41'

| SLIDING PRESSURE RECOVERY MODE 3 |
|---|
42'

| CONTROLLED SHUTDOWN |
|---|
4'3'

| LOAD REJECTION |
|---|
44'

| BLOCKAGE |
|---|
45'

$P_{IPCV}$

# Fig.11

35 — | SUPERVISOR |

$P_{IPBP1}, P_{IPBP2}$

**EP 2 143 891 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4226086 A